# EUROPEAN PATENT APPLICATION

(11) **EP 2 014 939 A2**
(43) Date of publication of application: **14.01.2009**
(21) Application number: 08251929.9
(22) Date of filing: 04.06.2008
(51) Int. Cl.: F16D 1/033

(54) **Drive shaft coupling and method, and equipment using same**

(30) Priority: 07.06.2007 US 759407
(71) Applicant: Manitowoc Crane Companies, Inc., Reno, Nevada 89501 (US)
(72) Inventor: Pleuss, Alan E., Manitowoc, Wisconsin 54220 (US)
(74) Representative: Merrifield, Sarah Elizabeth

(57) **Abstract**

A drive shaft connection (100) comprises a) a first rotational member (106, 110) having a first flange (132) with first and second surfaces and a perimeter; b) a second rotational member (98) having a second flange (142) with a surface frictionally engaging the first surface of the first flange (132); c) a compression member (150) having a surface frictionally engaging the second surface of the first flange (132); and d) a connection system connecting the second flange (142) and the compression member (150) together outside the perimeter of the first flange (132) such that they clamp the first flange (132) between them with a clamping force producing the frictional engagement. A method of transmitting torque between a first member and a second member is also included, as is a method of assembling a drive shaft connection between first and second rotational members, a method of connecting first and second rotational members together to form a drive shaft for a piece of equipment, and a crawler vehicle utilizing the invention.

## Description

### BACKGROUND

The present invention relates to couplings for drive shafts and other devices where torque is transmitted between members that need to be disconnected and reconnected. The invention is particularly useful in construction equipment, such as crawler cranes, which must be disassembled into a number of components to be transported between job sites. In particular, the present invention is useful in a drive assembly for powering the crawlers of a crawler crane.

Construction equipment, such as cranes or excavators, often must be moved from one job site to another. Moving a crane or an excavator can be a formidable task when the machine is large and heavy. For example, highway limits on vehicle-axle loads must be observed and overhead obstacles can dictate long, inconvenient routings to the job site.

One solution to improving the mobility of large construction machines, such as cranes, is to disassemble them into smaller, more easily handled components. The separate components can then be transported to the new job site where they are reassembled.

The typical practice has been to disconnect, remove, and transport the crawlers separately from the crane. In conventional cranes, the crawlers are typically powered by a hydraulic motor mounted directly on each crawler. Each hydraulic motor is connected to a hydraulic pump located on either the lower or upper works of the crane by as many as four hydraulic hoses, several of which are under very high pressure. Removal of the crawlers therefore requires the disconnection of these hydraulic hoses. As a result, specialized and expensive removable connections have to be installed in each of the hydraulic hoses. In addition, reconnection of the hydraulic hoses at the next job site often results in the infiltration of dirt and other contaminants into the hydraulic fluid system, resulting in a breakdown of the equipment.

U.S. Patent No. 6,158,535 discloses a crawler vehicle comprising a crawler body and a plurality of crawlers where each crawler is removably mounted on the carbody and is powered by a drive assembly. The drive assembly includes a hydraulic drive motor mounted on the crawler body; a track drive gear box; and a mechanical drive shaft connected between the hydraulic drive motor and the track drive gear box to transmit power from the drive motor to the track drive gear box. The mechanical drive shaft includes a removable connection that is releasable to permit the disconnection of the mechanical drive shaft from between the hydraulic drive motor and the track drive gear box, so as to permit the crawlers to be removed from the crawler body without dismounting the hydraulic drive motor from the crawler body. The invention of the '535 patent has been commercially utilized in cranes made and sold by Manitowoc Cranes of Manitowoc, Wisconsin.

The cranes utilizing the invention of the '535 patent have used a standard bolted flange connection for the removeable connection of the drive shaft. While that type of connection is suitable, it can be improved.

In a drive system requiring a drive shaft and a means to disconnect the drive shaft, there are several methods common to the art. Each of these has inherent drawbacks to making and breaking the connection. With known connection methods, the driver and the driven must be aligned axially and must be aligned (or "timed") rotationally to connect the mating parts. This is true of bolted connections, splined connections, square drives and others. Further, when aligning the two shafts, the weight of one side of the connection must be supported, requiring additional effort.

When disconnecting couplings of these known methods, the torque in the drive line must be eliminated or greatly reduced before breaking the joint. This can be a difficult and time consuming process. If this is not done, the preload on the components will cause the connection to bind and be exceedingly difficult to disassemble. Also, if the connection is disassembled before the preload is removed, there is the possibility of some of the stored energy being released unexpectedly.

It is therefore desirable to provide a connection in a drive shaft or other torque-transmitting structure that can be disassembled and reassembled without having to have the connecting parts rotationally aligned, and where the joint can be broken without having to first relieve any preloaded torque.

### BRIEF SUMMARY

A coupling for a drive shaft has been invented which makes it possible to disassemble and reassemble the connecting parts without having to have them rotationally aligned. The connection is made by means of a friction coupling. In a first aspect, the invention includes a drive shaft connection comprising a) a first rotational member having a first flange with first and second surfaces and a perimeter; b) a second rotational member having a second flange with a surface frictionally engaging the first surface of the first flange; c) a compression member having a surface frictionally engaging the second surface of the first flange; and d) a connection system connecting the second flange and the compression member together outside the perimeter of the first flange such that they clamp the first flange between them with a clamping force producing the frictional engagement.

In a second aspect, the invention includes method of transmitting torque between a first member and a second member comprising a) providing a first flange on the first member, with first and second surfaces on the first flange and a perimeter; b) providing a second flange on the second member, having a surface in contact with the first surface of the first flange; c) providing a compression member having a surface in contact with the second surface of the first flange; and d) applying a clamping force between the second flange and the compression member through connectors outside the perimeter of the first flange so as to frictionally engage the surface of the second flange with the first surface of the first flange, and to frictionally engage the surface of the compression member with the second surface of the first flange.

The invention can be applied to a crawler vehicle, such as a crawler vehicle comprising a crawler body and a plurality of crawlers, each of the crawlers being repeatedly attachably and removably mounted on the crawler body and powered by one or more drive assemblies, wherein each drive assembly comprises a) one or more hydraulic drive motors mounted on the crawler body; b) a track drive gear box; and c) one or more mechanical drive shafts connected between the one or more hydraulic drive motors and the track drive gear box to transmit power from the one or more drive motors to the track drive gear box, wherein the one or more mechanical drive shafts each comprise i) a first rotational member having a first flange with first and second surfaces and a perimeter; ii) a second rotational member having a second flange with a surface frictionally engaging the first surface of the first flange; iii) a compression member having a surface frictionally engaging the second surface of the first flange, and iv) a connection system connecting the second flange and the compression member together outside the perimeter of the first flange such that they clamp the first flange between them with a clamping force producing the frictional engagement.

In another aspect, the invention includes a method of assembling a drive shaft connection between first and second rotational members of a drive shaft, comprising a) providing a first flange on the first member, with first and second surfaces on the first flange; b) providing a second flange having a surface on the second member; c) providing a compression member having a surface; d) partially engaging the first and second flanges and the compression member such that the first and second rotational members are in axial alignment, the surface of the second flange is in contact with the first surface of the first flange, and the surface of the compression member is in contact with the second surface of the first flange, but the first and second flanges can still rotate with respect to each other; and e) applying a clamping force between the compression member and the second flange to frictionally engage the first and second flanges and the compression member such that torque can be transmitted between the first and second rotational members by the friction between the surface of the second flange in contact with the first surface of the first flange, and the surface of the compression member in contact with the second surface of the first flange, and wherein the clamping causes the compression member, first flange and second flange to all rotate together.

In yet another aspect, the invention includes a method of connecting first and second rotational members together to form a drive shaft for a piece of equipment comprising a) providing a first flange on the first member, with first and second surfaces on the first flange; b) providing a second flange having a surface on the second member; c) providing a compression member having a surface; d) connecting the compression member to the second flange so as to clamp the first flange between them without needing the first and second rotational members to be rotationally aligned; and e) applying a clamping force between the second flange and the compression member so as to frictionally engage the surface of the second flange with the first surface of the first flange, and to frictionally engage the surface of the compression member with the second surface of the first flange.

The preferred embodiment of the invention includes features in addition to those listed above. Moreover, the advantages over the current art discussed above are directly applicable to the preferred embodiment, but are not exclusive. The other features and advantages of the present invention will be further understood and appreciated when considered in relation to the detailed description of the preferred embodiment and the attached drawings.

### BRIEF DESCRIPTION OF THE DRAWINGS

FIG. 1 is a right side elevation view of a crawler crane incorporating a mechanical track drive and a drive assembly made in accordance with the teachings of this invention.

FIG. 2 is a plan view of the crawler crane taken along line 2-2 of FIG. 1.

FIG. 3 is a sectional elevation view taken along line 3-3 of FIG. 2 but with the track removed for sake of clarity.

FIG. 4 is a partial plan view taken along line 4-4 of FIG. 3, showing the drive shaft connection in an operational position.

FIG. 5 is a partial plan view taken along line 4-4 of FIG. 3, showing the drive shaft disconnected and in a stowed position.

FIG. 6 is a sectional elevation view taken along line 6-6 of FIG. 4.

FIG. 7 is a partial sectional view like FIG. 6 but of a first alternate embodiment of the invention.

FIG. 8 is a partial sectional view like FIG. 6 but of a second alternate embodiment of the invention.

FIG. 9 is a partial sectional view like FIG. 6 but of a third alternate embodiment of the invention.

### DETAILED DESCRIPTION OF THE DRAWINGS AND THE PRESENTLY PREFERRED EMBODIMENTS

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

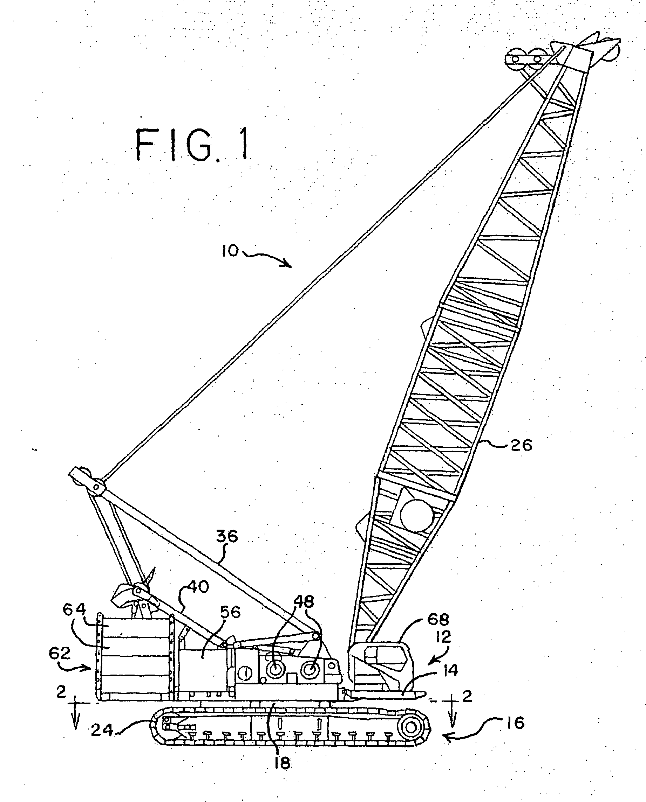

While the present invention will find application in all types of mechanical equipment, including the boom hoist cylinder crane disclosed in the '535 patent (which is hereby incorporated by reference), the preferred embodiment of the invention is described in conjunction with crawler crane 10 of FIGS. 1-6. Many aspects of the crawler crane 10 are not important to the working of the present invention, and are therefore not described in detail.

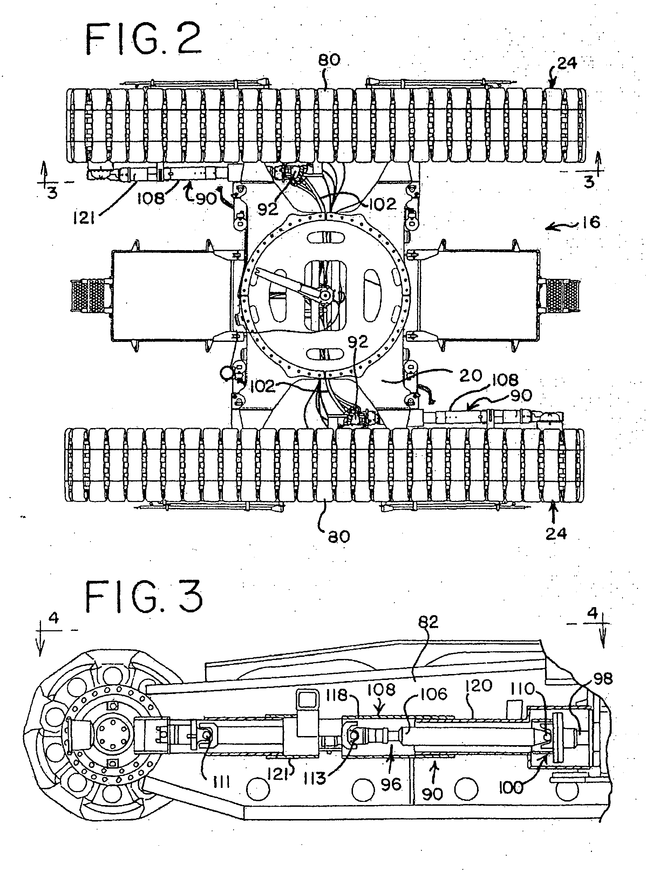

The crawler crane 10 includes an upper works 12 having a rotating bed 14 which is rotatably connected to a lower works 16 by a swing bearing 18. The lower works 16 includes a car body 20 (FIG. 2) and two independently powered crawlers 24. The upper works includes a boom 26 pivotally connected to the upper works 12. The angle of the boom 26 is controlled by well known means, including a mast 36 and gantry 40. As best seen in FIG. 1, the upper works 12 further includes one or more load hoist line drums and a boom hoist line drum 48 supported on the rotating bed 14 of the upper works 12. The load hoist line drum 48 is rotated to either pay out or retrieve the load hoist line. The upper works 12 further includes a power plant 56 and a counter weight assembly 62 comprising a plurality of counter weights 64 supported on a counter weight tray. The power plant 56 supplies power for the various mechanical and hydraulic operations of the crane 10, including movement of the crawlers 24, rotation of the rotating bed 14, and rotation of the load hoist line and boom hoist line drums 48. The mechanical and hydraulic connections between the power plant 56 and the above-listed components have been deleted from FIG. 1 for clarity. Operations of the various functions of the crane 10 are controlled from the operator's cab 68.

As best seen in FIG. 2, each crawler 24 is comprised of a crawler track 80 supported on a crawler frame 82. The crane preferably utilizes identical left and right crawler assemblies (see U.S. Patent No. 6,857,489, which is hereby incorporated by reference), although the invention is just as applicable to cranes where the crawler assemblies are mirror images of each other, as well as other configurations.

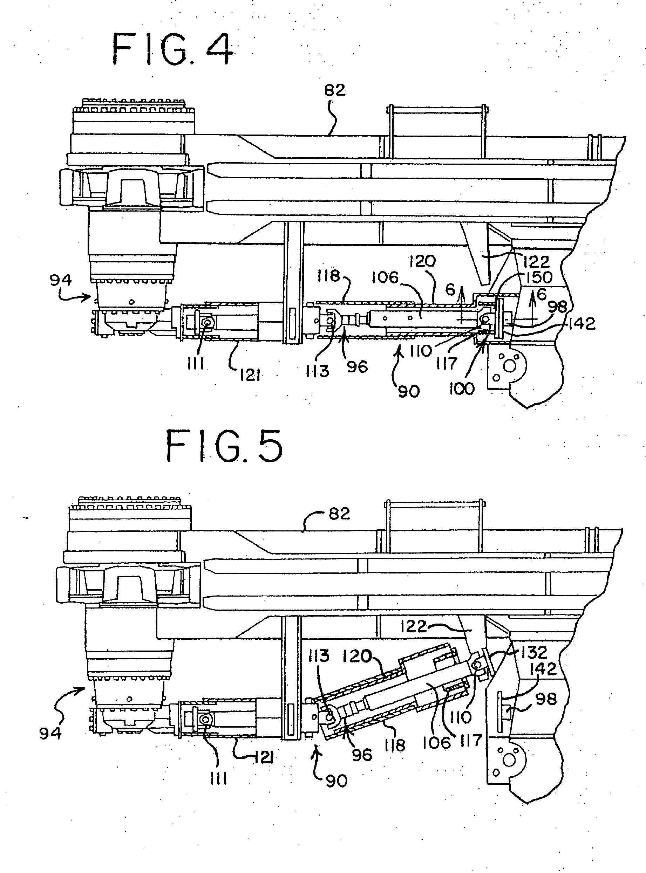

Each crawler 24 is independently powered by a crawler drive assembly 90. In the preferred embodiment, the crawler drive assembly 90 comprises a hydraulic drive motor 92 mounted on the car body 20, a track drive gear box assembly 94(FIG. 4) mounted on the crawler 24, and a mechanical drive shaft assembly 96 connected between the hydraulic drive motor 92 and the track drive gear box assembly 94. Power in the form of rotational torque is transferred by the mechanical drive shaft assembly 96 from the hydraulic drive motor 92 to the track drive gear box assembly 94, where it is utilized to move the crawler track 80.

The hydraulic drive motor 92 is flange mounted on the interior vertical face of a wing of car body 20. A coupling shaft 98 (FIG. 3) connected to the hydraulic drive motor 92 extends through to the opposite vertical face of the car body wing and terminates in a removable connection 100. Alternatively, the drive shaft of the hydraulic drive motor 92 can be extended through the car body wing and connected to the removable connection 100. The hydraulic drive motor 92 is powered by a plurality of hydraulic hoses 102 connected to the power plant 56. The hydraulic drive motor 92 may also comprise a brake to inhibit or prevent the rotation of the hydraulic drive motor 92.

As best seen in FIGS. 3 and 4, the mechanical drive shaft assembly 96 comprises a drive shaft 106 shielded by a collapsible shroud assembly 108. One end of the drive shaft 106 is connected to the removable connection 100 through a universal joint 110. The other end of the drive shaft 106 is connected to the track drive gear box assembly 94 on the crawler 24. The connection of the drive shaft 106 to the track drive gear box assembly 94 also comprises a universal joint 111 shielded by a shroud 121. Because of its length, the drive shaft 106 is supported in its middle and includes a third universal joint 113. The universal joint 113 is shielded by the shroud assembly 108. The shroud assembly 108 protects any personnel who may be working near the crane 10 from the rotational movement of the drive shaft 106 and the universal joints 110 and 113, as well as preventing dirt and other contaminants from infiltrating these components.

The track drive gear box assembly 94 is mounted on the interior face the crawler frame 82 near one end of the crawler 24 and comprises a planetary gear set connected to the crawler track 80 in a well known manner.

To disassemble the crawler crane 10 for transport to a different job site, the crawlers 24 are disconnected and removed from the lower works 16. Disconnection and removal of the crawlers 24 necessitates the disassembly of the crawler drive assembly 90.

As best seen in FIGS. 3-5, the crawler drive assembly 90 is disassembled by first removing a retaining pin on the shroud assembly 108. Removal of the retaining pin permits the shroud assembly 108 to collapse to permit access to the removable connection 100. In the preferred embodiment shown, the shroud assembly 108 comprises a pair of telescoping tubular members 118 and 120 wherein the tube 120 shielding the removable connection 100 can be retracted into the other tube 118 to expose the removable connection 100. The drive shaft 106 is then disconnected from the hydraulic drive motor 92 by disconnecting the removable connection 100. The drive shaft assembly 106 is then swung nearly horizontally, pivoting about universal joint 113, and stowed on the crawler 24 by placing the end of the drive shaft 106 on a storage bracket 122 attached to the interior side of the crawler frame 82. The stowed position of the drive shaft 106 is shown in FIG. 5. The crawlers 24 are then disconnected from the car body 20 and loaded onto a trailer (not shown) for transport to another job site. The hydraulic drive motor 92 stays mounted on the car body 20 during transport to the next job. As a result, the hydraulic drive motor 92 can remain connected to the hydraulic hoses 102, and consequently remain connected to the power plant 56.

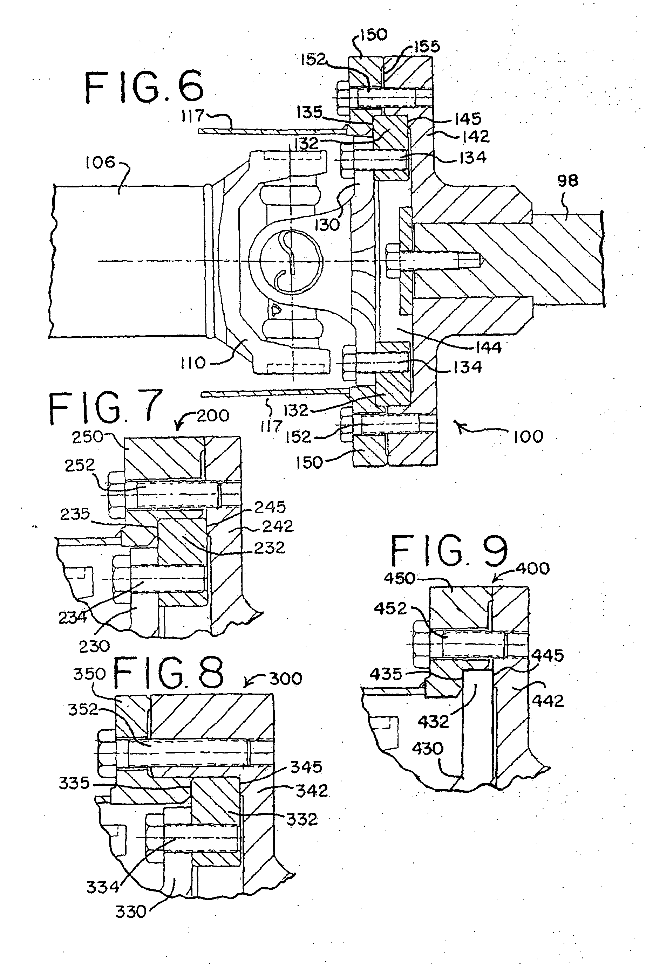

The removable drive shaft connection 100 is best seen in FIG. 6. It is made of three basic members: a) a first rotational member having a first flange with first and second surfaces and a perimeter; b) a second rotational member having a second flange with a surface frictionally engaging the first surface of the first flange; and c) a compression member having a surface frictionally engaging the second surface of the first flange. A connection system connects the second flange and the compression member together such that they clamp the first flange between them with a clamping force producing the frictional engagement. In most embodiments of the invention, the connection system is outside the perimeter of the first flange. Also, in most embodiments the frictional engagement provides the only engagement by which torque is transmitted between the first and second members.

In the first depicted embodiment, the first rotational member is the drive shaft 106 and universal joint 110. As seen in FIG 6, the right side element 130 of the universal joint has an annular plate 132 bolted onto it by bolts 134. The plate 132 may be affixed to the element 130 by any conventional means, but the preferred embodiment shown is a bolted connection to a standard bolt pattern on the element 130. The plate 132 provides the first and second surfaces for the first rotational member. These surfaces are generally opposing each other, on opposite sides of the plate 132.

The second rotational member is the drive shaft 98, which has a connection flange 142 affixed to the end. This connection flange 142 can be affixed to the shaft 98 by any conventional means, but in the shown embodiment it is a keyed connection utilizing a bolted compression member to minimize cost. The connection flange 142 has a series of axial holes around the outer perimeter. In the preferred embodiment, these are threaded holes, but they could be through holes.

On the face of the connection flange 142 opposite the drive shaft 98 there is a cylindrical recess 144 concentric to the axis of rotation. Thus, in this embodiment, the second flange comprises a recess, and the first flange member, represented by plate 132, is circular and fits at least partially within the recess. The plate 132 is preferably sized so that its outer diameter will have a clearance fit inside the recess 144 of the connection flange 142. The diameter of the plate 132 is preferably between about 0.005 and about 0.01 inches less than the diameter of the recess 144. This allows the plate 132 to pilot into the connection flange.

The connection flange 142 and the plate 132 are held together by means of a compression member 150 in the form of clamping ring or retainer 150. In the shown embodiment, a guard 117 to cover the universal joint 110 in the driven shaft is incorporated into the compression member 150. This compression member 150 has a hole pattern to match the hole pattern in the connection flange 142 described earlier. These holes allow for bolts 152, acting as the connecting system at multiple points outside the perimeter of the first flange (represented by plate 132), to provide a clamping force between the connection flange 142 and the compression member 150 to be applied to the plate 132. The performance of the system can be further enhanced by proper positioning of these holes to balance the clamping load between the connection flange 142 and the plate 132. The depth of the recess 144 is sufficient so that the plate 132 will be self-supporting when placed in the recess 144 and before the compression member 150 is put in place. The compression member 150 also has a recess to allow it to pilot over the plate 132. This recess is of an appropriate depth to allow contact with both the plate 132 (at surface 135) and the connection flange 142. A gap 155 is provided over part of the connection between compression member 150 and the connection flange 142 so that the tightening of bolts 152 clamps the surface of the connection flange 142 against plate 132 (providing the first surface of the first flange at surface 145), and the compression member 150 against the plate 132 (forming the second surface of the first flange) at surface 135. The first and second surfaces 135 and 145 are generally planar, parallel to each and perpendicular to the axis of rotation of the rotational members, however they need not be. What is important is that these surfaces provide friction contact between the three parts, and that the shape and position of the surfaces allow the forces generated by the connection system to create forces normal to the surfaces so that the coefficient of friction for the surfaces multiplied by the normal forces provides enough friction so that the torque required to be transmitted through the coupling can be transmitted without the member slipping past one another.

By utilizing a clamping force arranged in the manner described, the connection does not require a set-up operator to rotationally time the two shafts in any way prior to connection. Also, with the ability to pilot the plate 132 into the recess 144 of the connection flange during assembly, the driven shaft 106 is supported causing less effort to be required. In this way when the system is assembled, the first and second flanges are partially engaged such that the first and second rotational members are in axial alignment, the surface of the second flange is in contact with the first surface of the first flange, and the surface of the compression member is in contact with the second surface of the first flange, but the first and second flanges can still rotate with respect to each other. Later in the set-up, a clamping force is applied between the compression member and the second flange to fully frictionally engage the first and second flanges and the compression member such that the desired amount of torque can be transmitted between the first and second rotational members by the friction between the surface of the second flange in contact with the first surface of the first flange, and the surface of the compression member in contact with the second surface of the first flange. The clamping causes the compression member, first flange and second flange to all rotate together.

During disassembly there is no need for a procedure to remove any residual torque in the driveline. Any potential energy that may be stored in the driveline will be released as the clamping force between the compression member 150 and the connection flange 142 is removed.

This design can be adapted to nearly any foreseen drive configuration as it can be readily bolted to existing componentry. Also, this design could take several other forms while still maintaining the spirit of the invention. FIG. 7 shows an alternate design of removable connection 200 where the connection between the compression member 250 and the connection flange 242 is shifted to the right, compared to the configuration in FIG. 6. The bolts 252 can still generate a clamping force so that plate 232 (held onto the flange of the universal joint member 230 by bolts 234) is sandwiched between the compression member 250 and the connection flange 242. The surfaces 235 and 245 provide the friction necessary to transmit torque through the connection.

FIG. 8 shows another alternate design for a removable connection 300 where the connection between the compression member 350 and the flange 342 is shifted to the left, compared to the configuration in FIG. 6. The bolts 352 can still generate a clamping force so that plate 332 (held onto the flange of the universal joint member 330 by bolts 334) is sandwiched between the compression member 350 and the connection flange 342. The surfaces 335 and 345 provide the friction necessary to transmit torque through the connection.

The plate and connection flange are shown as being separate items from their respective shafts, but could also be designed as being integral to these components. In the embodiment of FIG. 9, the removable connection 400 is made with the universal joint member 430 having a sufficiently wide flange itself such that no separate plate need be bolted onto it. Instead, the outer portion 432 of the flange is clamped at surfaces 435 and 445 between compression member 450 and connection flange 442 by action of bolts 452.

The surfaces that provide the frictional engagement do not have any special surface treatment. Rather, they are preferably formed with traditional milling equipment, and are not polished. Preferably for a crawler drive shaft assembly, there are six bolts 152 of 12 mm diameter generating the clamping force and are located on a bolt circle of approximately 7.75". The embodiments shown depict a shaft as the torque driver, but the torque driver could also be any prime mover or any mechanism for transmitting torque. The compression member 150 is shown as a single piece that forms a full circle, and which contacts and captures the entire perimeter of the plate 132, but could also be constructed of multiple pieces, or one large arc segment that does not complete a full circle. Other methods of transmitting the clamping force could be employed, such as hydraulic actuated clamps or other automated means.

This invention has been shown as a means to transmit rotational power through a joint which may be disconnected. In other foreseeable embodiments, it could also be used in other applications such as transmitting torque with no rotational motion, or transmitting linear motion.

It should be appreciated that the apparatus and methods of the present invention are capable of being incorporated in the form of a variety of embodiments, only a few of which have been illustrated and described above. It should be appreciated that the present invention will find application in any type mechanical equipment, including construction and mining equipment, agricultural implements and trucks, as well as other crawler powered vehicles.

Thus, while several embodiments of the present invention have been described herein, those with skill in this art will recognize changes, modifications, alterations and the like which still shall come within the spirit of the inventive concept, and such are intended to be included within the scope of the invention as expressed in the following claims.

## Claims

1. A drive shaft connection comprising:
a) a first rotational member having a first flange with first and second surfaces and a perimeter;
b) a second rotational member having a second flange with a surface frictionally engaging the first surface of the first flange;
c) a compression member having a surface frictionally engaging the second surface of the first flange; and
d) a connection system connecting the second flange and the compression member together outside the perimeter of the first flange such that they clamp the first flange between them with a clamping force producing said frictional engagement.

2. The drive shaft connection of claim 1 wherein the first and second surfaces are generally planar and parallel to each other.

3. The drive shaft connection of claim 1 wherein the connection system comprises a plurality of bolts.

4. The drive shaft connection of claim 1 wherein the first rotational member comprises a driven shaft and the second rotational member comprises a driving shaft.

5. The drive shaft connection of claim 1 wherein first flange comprises an annular plate connected to a universal joint.

6. The drive shaft connection of claim 1 wherein the second flange comprises a cylindrical recess and the first flange member is circular and fits at least partially within the recess.

7. The drive shaft connection of claim 6 wherein the diameter of the first flange is between about 0.005 and about 0.01 inches less than the diameter of the recess.

8. The drive shaft connection of claim 7 wherein the depth of the recess is sufficient so that the first flange member will be self-supporting when placed in the recess and before the compression member is put in place.

9. The drive shaft connection of claim 3 wherein the bolts are threaded into holes in the second flange.

10. A method of transmitting torque between a first member and a second member comprising:
a) providing a first flange on said first member, with first and second surfaces on said first flange and a perimeter;
b) providing a second flange on said second member, having a surface in contact with the first surface of the first flange;
c) providing a compression member having a surface in contact with the second surface of the first flange; and
d) applying a clamping force between the second flange and the compression member through connectors outside the perimeter of the first flange so as to frictionally engage the surface of the second flange with the first surface of the first flange, and to frictionally engage the surface of the compression member with the second surface of the first flange.

11. The method of claim 10 wherein the second member comprises a rotational drive shaft and the first member comprises a rotational driven shaft.

12. The method of claim 10 wherein the clamping force is applied by tightening a plurality of bolts connecting the compression member to the second flange.

13. The method of claim 11 wherein the mating surface of the second flange with the first surface of the first flange is generally planer and perpendicular to the axis of rotation of the dive and driven shafts.

14. The method of claim 10 wherein the compression member comprises a retaining ring that comprises a single piece that forms a full circle.

15. The method of claim 10 wherein the compression member comprises multiple pieces.

16. The method of claim 10 wherein said frictional engagement providing the only engagement by which torque is transmitted between the first and second members.

17. A crawler vehicle comprising a crawler body and a plurality of crawlers, each of said crawlers being repeatedly attachably and removably mounted on said crawler body and powered by one or more drive assemblies, wherein each drive assembly comprises:
a) one or more hydraulic drive motors mounted on said crawler body;
b) a track drive gear box; and
c) one or more mechanical drive shafts connected between said one or more hydraulic drive motors and said track drive gear box to transmit power from said one or more drive motors to said track drive gear box, wherein said one or more mechanical drive shafts each comprise:
i) a first rotational member having a first flange with first and second surfaces and a perimeter;
ii) a second rotational member having a second flange with a surface frictionally engaging the first surface of the first flange;
iii) a compression member having a surface frictionally engaging the second surface of the first flange, and
iv) a connection system connecting the second flange and the compression member together outside the perimeter of the first flange such that they clamp the first flange between them with a clamping force producing said frictional engagement.

18. The crawler vehicle of claim 17 wherein the vehicle comprises a crawler crane having an upper works rotatably mounted on a lower works, said lower works comprising said crawler body, a boom pivotally mounted on said upper works, and a load hoist line for lifting loads.

19. A method of assembling a drive shaft connection between first and second rotational members of a drive shaft, comprising:
a) providing a first flange on said first member, with first and second surfaces on said first flange;
b) providing a second flange having a surface on said second member;
c) providing a compression member having a surface;
d) partially engaging the first and second flanges and the compression member such that the first and second rotational members are in axial alignment, the surface of the second flange is in contact with the first surface of the first flange, and the surface of the compression member is in contact with the second surface of the first flange, but the first and second flanges can still rotate with respect to each other; and
e) applying a clamping force between the compression member and the second flange to frictionally engage the first and second flanges and the compression member such that torque can be transmitted between the first and second rotational members by the friction between the surface of the second flange in contact with the first surface of the first flange, and the surface of the compression member in contact with the second surface of the first flange, and wherein the clamping causes the compression member, first flange and second flange to all rotate together.

20. The method of assembling a drive shaft connection of claim 19 wherein the second flange comprises a cylindrical recess and the first flange member is circular and is placed at least partially within the recess when the first and second flanges are partially engaged.

21. The method of assembling a drive shaft connection of claim 20 wherein the depth of the recess is sufficient so that the first flange member is self supporting when placed in the recess and before the compression member is put in place.

22. A method of connecting first and second rotational members together to form a drive shaft for a piece of equipment comprising:
a) providing a first flange on said first member, with first and second surfaces on said first flange;
b) providing a second flange having a surface on said second member;
c) providing a compression member having a surface;
d) connecting the compression member to the second flange so as to clamp the first flange between them without needing the first and second rotational members to be rotationally aligned; and
e) applying a clamping force between the second flange and the compression member so as to frictionally engage the surface of the second flange with the first surface of the first flange, and to frictionally engage the surface of the compression member with the second surface of the first flange.

23. The method of claim 22 wherein the mating surface of the second flange with the first surface of the first flange is generally planer and perpendicular to the axis of rotation of the rotational members.

24. The method of claim 22 wherein the mating surface of the compression member with the second surface of the first flange is generally planer and perpendicular to the axis of rotation of the rotational members.
